## Europäisches Patentamt
## European Patent Office
## Office européen des brevets

(11) Numéro de publication: **0 099 796**
**B1**

(19)

(12) **FASCICULE DE BREVET EUROPÉEN**

(45) Date de publication du fascicule du brevet:
15.10.86

(51) Int. Cl.⁴: **F 03 B 11/06**

(21) Numéro de dépôt: **83401362.5**

(22) Date de dépôt: **01.07.83**

(54) Turbine-pompe multi-étages de haute chute.

(30) Priorité: **01.07.82 FR 8211575**

(43) Date de publication de la demande:
**01.02.84 Bulletin 84/5**

(45) Mention de la délivrance du brevet:
**15.10.86 Bulletin 86/42**

(84) Etats contractants désignés:
**AT CH DE FR GB IT LI**

(56) Documents cité:
**FR-A-2 140 857**
**GB-A-934 364**
**US-A-3 620 639**

**ESCHER WYSS MITTEILUNGEN, vol. 53, no. 1/2,
1980, pages 40-44 Zürich, CH. A. CHRIST et al.:
"Hydrostatische axiallager für Speicherpumpen"**

(73) Titulaire: **NEYRPIC, 75 rue du Général Mangin,
F-38100 Grenoble (FR)**

(72) Inventeur: **Rondot, Jack, 7, Allée des Mitaillères,
F-38240 Meylan (FR)**
Inventeur: **Casacci, Séverin, Chemin Malanot -
Corenc, F-38700 La Tronche (FR)**

(74) Mandataire: **Karmin, Roger, Cabinet MONNIER
150, cours Lafayette, F-69003 Lyon (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 099 796 B1

LIBER, STOCKHOLM 1986

## Description

La présente invention concerne un perfectionnement aux turbines-pompes multiétages de haute chute utilisées dans l'industrie hydroélectrique.

Dans les turbines-pompes multiétages de haute-chute connues actuellement, le rotor est monté sur deux paliers hydrodynamiques, un des paliers étant situé à la partie supérieure, et l'autre à la partie inférieure. Le palier inférieur est monté sur le coude d'aspiration de la turbine, et au-dessus de celui-ci se trouve placé un joint-labyrinthe qui est chargé de faire l'étanchéité entre l'arbre et le coude d'aspiration. Ce joint-labyrinthe entraine un supplément d'encombrement axial important, ce qui fixe un entraxe entre les deux paliers assez important. Pendant les marches en régime transitoire, il apparaît sur les roues d'importantes poussées radiales entraînant en raison de cet entraxe important, des déformations sur la ligne d'arbres. En conséquence, il est nécessaire de prévoir, au niveau des joints-labyrinthe équipant les roues, des jeux assez importants, ce qui entraîne des pertes par fuite assez importantes, et se traduit finalement par une perte de rendement de la machine.

Par ailleurs, cette augmentation des flèches dymamiques, aussi bien en régime normal qu'en régime transitoire, constitue un facteur d'augmentation des usures des divers joints-labyrinthe, ainsi qu'un facteur d'augmentation des bruits. Enfin, pour réduire cette flèche dynamique, il faudrait remonter le palier hydrodynamique inférieur, ce qui entraînerait une augmentation de l'angle du cône intérieur au coude, et conduirait à un tracé extérieur de ce coude plus encombrant à section de passage égale. Ce nouveau tracé de coude n'étant pas optimal entraînerait des phénomènes de cavitation avec les usures qui en découlent, ainsi qu'une perte de rendement.

La présente invention permet de pallier ce genre d'inconvénients et donc de réaliser une turbine-pompe de haute-chute dont l'entraxe effectif entre les paliers-support d'arbre est réduit au minimum, ce qui permet en particulier d'utiliser pour la machine des joints-labyrinthe à jeux réduits, et ce qui peut permettre en outre de modifier les diverses dimensions des éléments de la machine de façon à réaliser un compromis optimum entre l'entraxe le diamètre de l'arbre, et l'angle du cône intérieur au coude d'aspiration.

Dans le document britannique GB-A-934.364, il est montré une pompe dont le palier supérieur (15) est lubrifié par de l'huile et dont le palier inférieur (16) est pourvu d'un coussinet en caoutchouc lubrifié par de l'eau.

Dans le document US-A-3.620.639. il est décrit une pompe centrifuge pourvue d'un palier inférieur de l'arbre du type hydrostatique. Ce palier est extrêmement complexe puisqu'il comporte des organes d'alimentation en eau du palier pourvus de filetages intérieurs et extérieurs. Cette pompe ne peut pas tourner en turbine car l'eau serait aspirée à partir du palier hydrostatique qui ne serait donc pas alimenté. On ne peut donc pas transférer le palier décrit dans le document US-3.620.639 dans la pompe-turbine décrite dans le document britannique n° 934.364.

La turbine-pompe multi-étages de haute chute conforme à l'invention est caractérisée en ce qu'elle comprend un palier hydrostatique directement alimenté en eau sous pression à partir de la conduite haute pression et agissant comme un joint tandis qu'il est situé entre l'intérieur et l'extérieur dudit coude.

Les caractéristiques et avantages de l'invention apparaîtront plus clairement à l'aide de la description suivante d'un exemple de réalisation. en référence aux dessins annexés dans lesquels:

- la figure 1 est une vue en coupe axiale d'une turbine-pompe bi-étages conforme à l'invention;
- la figure 2 est une vue agrandie du palier hydrostatique mis en place sur la turbine-pompe de la figure 1, conformément à l'invention.
- la figure 3 est une vue en coupe suivant la ligne III-III de la figure 2.

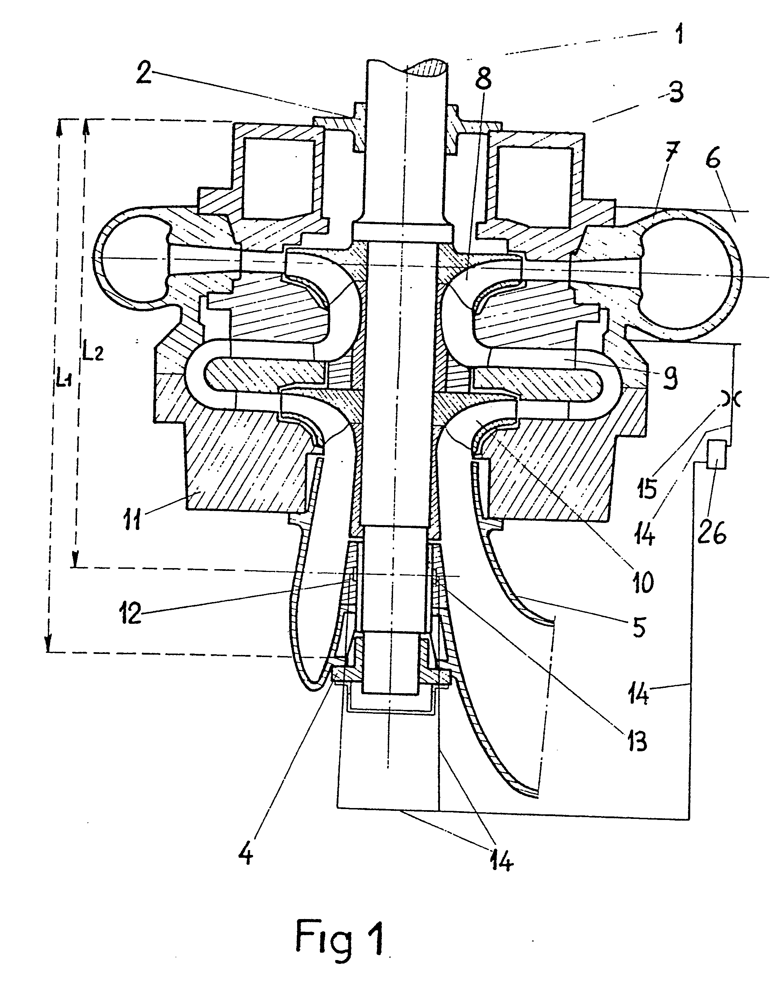

Sur la figure 1, la référence 1 désigne l'arbre constituant un des éléments essentiels de la partie rotative, ou rotor, de la machine. De manière classique, cet arbre est supporté par d'une part un palier supérieur hydrodynamique 2 fixé au flasque supérieur 3 de la machine, et d'autre part, un palier hydrodynamique inférieur 4 fixé sur le coude d'aspiration 5.

De manière très classique également, la turbine pompe bi-étages représentée comporte une conduite haute-pression 6, une bâche de distribution 7, une roue supérieure 8, un canal de retour 9, une roue inférieure 10, et un flasque inférieur 11 portant le coude d'aspiration 5.

Conformément à l'invention, le joint-labyrinthe, normalement situé au-dessus du palier inférieur 4 et chargé de faire l'étanchéité entre le coude d'aspiration 5 et l'arbre 1, est remplacé par un palier hydrostatique 12 dont les poches d'eau 13 sont alimentées en eau sous forte pression à partir de la conduite haute-pression 6 à l'aide de canalisations 14. L'eau est acheminée au palier hydrostatique 12 éventuellement à travers un dispositif de contrôle de débit 15 en cas de très haute chute. et un filtre 26 en cas d'eau chargée d'impuretés.

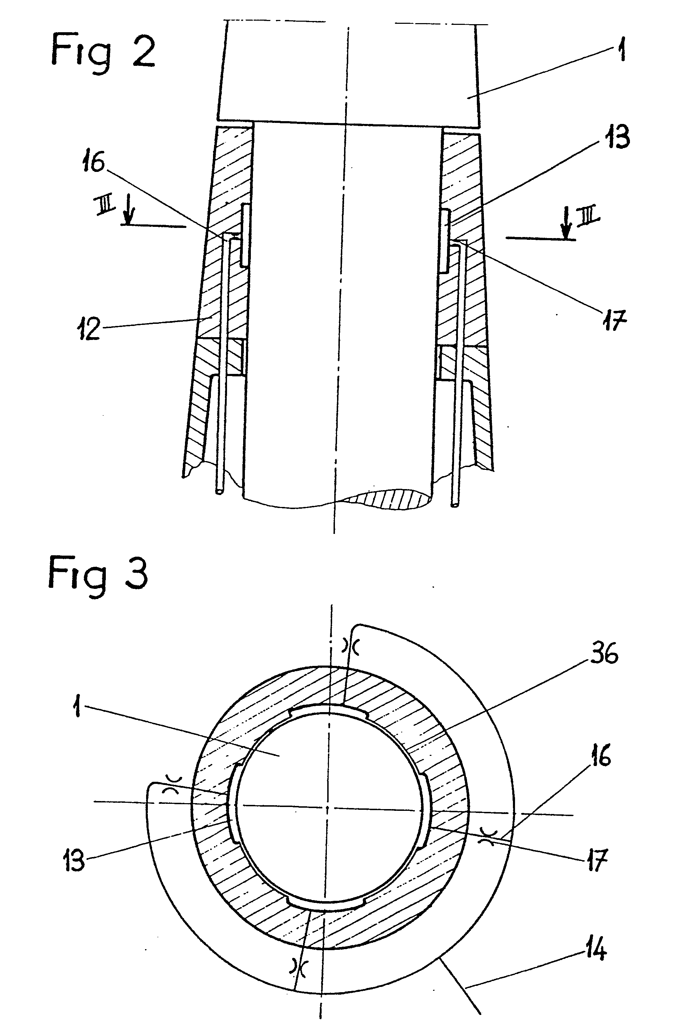

En se reportant également aux figures 2 et 3, on voit que le palier hydrostatique 12 comporte, de manière classique, une série de poches 13. L'eau sortant des poches forme un film 36 sur toute la surface du palier. Chacune des poches 13 est reliée à la canalisation générale d'alimentation en eau 14 par des conduites individuelles 16 comportant chacune un dispositif de contrôle de débit 17. De manière classique les dispositifs de contrôle de débit tels que 15 et 17 sont chacun constitués par une ou des membrane(s) percée(s) d'un ou plusieurs orifice(s) calibré(s).

On s'aperçoit finalement, que grâce à la construction conforme à l'invention, l'entraxe effectif entre les paliers supérieur et inférieur passe de la valeur L1 porté sur la figure 1 à la valeur L2 inférieure à L1, ceci étant du au fait que le palier hydrostatique 12 joue non seulement le rôle de joint mais encore le rôle de palier.

Dans l'exemple préférentiel de réalisation qui vient d'être décrit, on a préféré conserver, pour des raisons mécaniques évidentes, le palier hydrodynamique inférieur 4. Il va de soi que l'on pourrait également, en particulier dans le cas de petites machines, supprimer totalement le palier 4, et remplacer alors l'ensemble, constitué normalement par ce palier inférieur et son joint-labyrinthe associé, par le palier hydrostatique 12.

## Revendication

Turbine-pompe multi-étages de haute chute, du genre comportant un palier hydrodynamique supérieur (2) et un palier inférieur solidaire d'un coude (5), et comprenant un joint disposé entre l'arbre de la pompe et le coude, caractérisée en ce qu'elle comprend un palier hydrostatique (12) directement alimenté en eau sous pression à partir de la conduite haute pression et agissant comme un joint tandis qu'il est situé entre l'intérieur et l'extérieur dudit coude.

## Patentansprüche

Mehrfustige Pumpenturbine für hohes Gefälle mit einem oberen hydrodynamischen Lager (2) und einen unteren, mit einem Krümmer (5) fest verbundenen Lager sowie einer zwischen der Ampenwelle und dem Krümmer vorgesehenen Dichtung, gekennzeichnet durch ein hydrostatisches Lager (12), das aus einer Hochdruckleitung direkt mit Druckwasser gespeist wird und als Dichtung wirkt, während es sich zwischen der Innen und der Aussenseite des Krümmers befindet.

## Claim

A high-fall multi-stage pump turbine, of the type comprising an upper hydrodynamic bearing (2) and a lower bearing which is integral with an elbow (5) and comprising a joint arranged between the pump shaft and the elbow, characterised in that the said pump comprises a hydrostatic bearing (12), which is supplied directly with water under pressure from the high pressure conduit and which acts as a joint since it is arranged between the inside and the outside of the said elbow.

Fig 1

# Fig 2

# Fig 3